# EUROPÄISCHE PATENTANMELDUNG

(11) **EP 3 257 635 A1**
(43) Veröffentlichungstag der Anmeldung: **20.12.2017**
(21) Anmeldenummer: 17173998.0
(22) Anmeldetag: 01.06.2017
(51) Int. Cl.: B25F 5/00, H01M 10/48

(54) **HANDWERKZEUGMASCHINENVORRICHTUNG UND VERFAHREN ZUM BETRIEB EINER HANDWERKZEUGMASCHINENVORRICHTUNG**

(30) Priorität: 15.06.2016 DE 102016210638
(71) Anmelder: Robert Bosch GmbH, 70442 Stuttgart (DE)
(72) Erfinder: Gonda, Martin, 77815 Buehl (DE)

(57) **Zusammenfassung**

Die Erfindung geht aus von einer Handwerkzeugmaschinenvorrichtung, insbesondere einer Induktionshandwerkzeugmaschinenvorrichtung, mit zumindest einem Ausgabeelement (10a; 10b), welches in zumindest einem Betriebszustand zu einer Ausgabe einer Statusinformation vorgesehen ist.

Es wird vorgeschlagen, dass das Ausgabeelement (10a; 10b) in zumindest einem Diagnosebetriebszustand zur Ausgabe wenigstens einer von der Statusinformation abweichenden Diagnoseinformation vorgesehen ist.

## Beschreibung

### Stand der Technik

Aus dem Stand der Technik sind Handwerkzeugmaschinenvorrichtungen bekannt, mit einem Anzeigeelement, welches in zumindest einem Betriebszustand zu einer Anzeige einer Statusinformation, beispielsweise zur Betriebskontrolle, vorgesehen ist.

### Offenbarung der Erfindung

Die Erfindung geht aus von einer Handwerkzeugmaschinenvorrichtung, insbesondere einer Induktionshandwerkzeugmaschinenvorrichtung, mit zumindest einem Ausgabeelement, welches in zumindest einem, insbesondere aktiven, Betriebszustand, insbesondere einem Verwendungsbetriebszustand und/oder Normalbetriebszustand, zu einer Ausgabe einer Statusinformation vorgesehen ist.

Es wird vorgeschlagen, dass das Ausgabeelement in zumindest einem, insbesondere aktiven, Diagnosebetriebszustand zur Ausgabe wenigstens einer von der Statusinformation abweichenden Diagnoseinformation vorgesehen ist. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Unter einer "Handwerkzeugmaschinenvorrichtung" soll dabei insbesondere zumindest ein Teil und/oder eine Unterbaugruppe einer Handwerkzeugmaschine oder zumindest ein Teil und/oder eine Unterbaugruppe eines Geräts, vorteilhaft eines Handwerkzeugmaschinenladegeräts, zur Verwendung mit einer Handwerkzeugmaschine verstanden werden. Insbesondere kann die Handwerkzeugmaschinenvorrichtung auch zumindest eine Ansteuerelektronik, vorteilhaft mit einer Recheneinheit, umfassen, welche insbesondere zu einer Ansteuerung des Ausgabeelements vorgesehen ist. Bevorzugt ist die Handwerkzeugmaschinenvorrichtung dabei zum Einsatz in einer Induktionshandwerkzeugmaschine und/oder einem Induktionshandwerkzeugmaschinenladegerät vorgesehen. Unter einer "Handwerkzeugmaschine" soll dabei insbesondere eine, insbesondere handgehaltene, werkstückbearbeitende Maschine, wie beispielsweise ein Akkuschrauber, ein Akkubohrer, eine Bohrmaschine, ein Bohr- und/oder Schlaghammer, eine Säge, ein Hobel, ein Schrauber, eine Fräse, ein Schleifer, ein Winkelschleifer, ein Gartengerät und/oder ein Multifunktionswerkzeug verstanden werden. Bevorzugt ist die Handwerkzeugmaschine dabei als Induktionshandwerkzeugmaschine ausgebildet und insbesondere in zumindest einem Betriebszustand zumindest zu einem kontaktlosen, insbesondere induktiven, Empfang von Energie, insbesondere elektrischer Energie, vorgesehen. Ferner soll unter einem "Handwerkzeugmaschinenladegerät" insbesondere ein Ladegerät verstanden werden, welches zu einem Laden einer Handwerkzeugmaschine vorgesehen ist. Insbesondere ist das Handwerkzeugmaschinenladegerät zu einem Übertragen von Energie, insbesondere elektrischer Energie, an die Handwerkzeugmaschine vorgesehen. Bevorzugt ist das Handwerkzeugmaschinenladegerät dabei als Induktionshandwerkzeugmaschinenladegerät ausgebildet und insbesondere in zumindest einem Betriebszustand zumindest zu einer kontaktlosen, insbesondere induktiven, Übertragung von Energie, insbesondere elektrischer Energie, insbesondere an die Handwerkzeugmaschine, vorgesehen. Unter einer "Recheneinheit" soll insbesondere eine elektrische und/oder elektronische Einheit verstanden werden, welche insbesondere einen Informationseingang, eine Informationsverarbeitung und eine Informationsausgabe aufweist. Vorteilhaft weist die Recheneinheit ferner zumindest einen Prozessor, zumindest einen Speicher, zumindest ein Ein- und/oder Ausgabemittel, zumindest ein Betriebsprogramm, zumindest eine Regelroutine, zumindest eine Steuerroutine und/oder zumindest eine Berechnungsroutine auf.

Des Weiteren soll unter einem "Ausgabeelement" insbesondere ein Element verstanden werden, welches insbesondere zumindest zwei Ausgabezustände, vorteilhaft zumindest einen aktiven Ausgabezustand und zumindest einen inaktiven Ausgabezustand, aufweist und insbesondere in zumindest einem der Ausgabezustände, insbesondere dem aktiven Ausgabezustand, zu einer haptischen, akustischen und/oder vorteilhaft optischen Ausgabe einer, insbesondere von einem Benutzer wahrnehmbaren, Information und/oder eines , insbesondere von einem Benutzer wahrnehmbaren, Signals, insbesondere Ausgabesignals, vorgesehen ist. Insbesondere ist das Ausgabeelement dabei von einer Datenschnittstelle, wie beispielsweise einem USB-Anschluss, verschieden. Unter einer "Statusinformation" soll in diesem Zusammenhang insbesondere eine Information, insbesondere ein Ausgabesignal, verstanden werden, welche in dem Betriebszustand, insbesondere dem Verwendungsbetriebszustand und/oder Normalbetriebszustand, auftritt und/oder auftreten kann und/oder den Betriebszustand, insbesondere den Verwendungsbetriebszustand und/oder Normalbetriebszustand, kennzeichnet. Die Statusinformation kann dabei beispielsweise einer Betriebskontrollinformation, einer Betriebsstatusinformation, einer Bereitschaftsinformation, einer Ladeinformation und/oder einer allgemeinen Fehlerinformation entsprechen. Darüber hinaus soll unter einem "Diagnosebetriebszustand" insbesondere ein, insbesondere von einem Verwendungsbetriebszustand und/oder Normalbetriebszustand verschiedener, Betriebszustand verstanden werden, welcher insbesondere zu einer Wartung, einer Fehlerbehebung und/oder einer Funktionsanalyse der Handwerkzeugmaschinenvorrichtung vorgesehen ist. In diesem Zusammenhang soll unter einer "Diagnoseinformation" insbesondere eine Information, insbesondere ein Ausgabesignal, verstanden werden, welche in dem Diagnosebetriebszustand vorliegt und/oder, beispielsweise durch Servicepersonal, abgerufen und/oder aufgerufen werden kann. Vorteilhaft entspricht die Diagnoseinformation dabei einer speziellen Rückmeldeinformationen über einen Betrieb der Handwerkzeugmaschinenvorrichtung, wie beispielsweise über eine Effektivität und/oder einen Wirkungsgrad einer Energieübertragung und/oder Betriebsinformationen eines Energiespeichers einer Handwerkzeugmaschine oder dergleichen, und/oder einer detaillierten Fehlerinformation, wie beispielsweise einer Art eines auftretenden Fehlers oder dergleichen. Die Diagnoseinformation und die Statusinformation können sich dabei insbesondere durch eine Intensität, eine Signalabfolge und/oder eine Signalfrequenz eines Ausgabesignals des Ausgabeelements unterscheiden. Durch diese Ausgestaltung der Handwerkzeugmaschinenvorrichtung kann vorteilhaft eine Effizienz und/oder eine Flexibilität verbessert werden. Insbesondere können dabei vorteilhaft einfach Diagnoseinformationen zwischen der Handwerkzeugmaschinenvorrichtung und einem Benutzer und/oder einem Servicepersonal ausgetauscht werden, wobei vorteilhaft auf eine Demontage der Handwerkzeugmaschinenvorrichtung und/oder spezielle Diagnosewerkzeuge verzichtet werden kann. Somit können vorteilhaft Kosten gesenkt und/oder eine Betriebssicherheit verbessert werden. Zudem kann vorteilhaft ein Fertigungsprozess und/oder eine Herstellungsqualität verbessert werden.

Eine besonders vorteilhafte Betriebsdiagnose kann insbesondere erreicht werden, wenn das Ausgabeelement zur Ausgabe von zumindest zwei, vorteilhaft zumindest vier, vorzugsweise zumindest sechs und besonders bevorzugt zumindest acht, verschiedenen Diagnoseinformationen vorgesehen ist. Die verschiedenen Diagnoseinformationen können sich dabei insbesondere durch eine Intensität, eine Signalabfolge und/oder eine Signalfrequenz eines Ausgabesignals des Ausgabeelements unterscheiden.

Das Ausgabeelement könnte beispielsweise als haptisches Ausgabeelement, wie beispielsweise als Taster, und/oder als akustisches Ausgabeelement, wie beispielsweise als Lautsprecher, ausgebildet sein. Vorzugsweise ist das Ausgabeelement jedoch als optisches Ausgabeelement ausgebildet. Unter einem "optischen Ausgabeelement" soll dabei insbesondere ein, vorteilhaft einzelnes, Anzeigeelement, insbesondere Leuchtelement, insbesondere eine Glühlampe und/oder vorzugsweise eine, vorteilhaft einfarbige, LED und/oder OLED, verstanden werden. Hierdurch kann insbesondere ein vorteilhaft kostengünstiges und/oder flexibel einsetzbares Ausgabeelement bereitgestellt werden. Zudem kann vorteilhaft auf bereits bestehende Ausgabeelemente und insbesondere Einbautechniken zurückgegriffen werden.

Das Ausgabeelement könnte beispielsweise als Fehler-Leuchtelement und/oder Ladestatus-Leuchtelement ausgebildet sein. In einer bevorzugten Ausgestaltung der Erfindung wird jedoch vorgeschlagen, dass das Ausgabeelement als Bereitschafts-Leuchtelement, insbesondere Standby-Leuchtelement, ausgebildet ist. Hierdurch kann insbesondere eine vorteilhaft einfache Diagnose und/oder Auswertung erreicht werden.

Darüber hinaus wird vorgeschlagen, dass die Handwerkzeugmaschinenvorrichtung zumindest eine Ansteuerelektronik, insbesondere die bereits zuvor genannte Ansteuerelektronik, umfasst, welche dazu vorgesehen ist, zumindest in dem Diagnosebetriebszustand das Ausgabeelement zur Erzeugung der Diagnoseinformation mit einem veränderlichen Ansteuersignal anzusteuern. Das Ansteuersignal entspricht dabei vorzugsweise einem Rechtecksignal und/oder einer Rechteckschwingung. Vorteilhaft ist die Ansteuerelektronik zudem dazu vorgesehen, in dem Betriebszustand, insbesondere dem Verwendungsbetriebszustand und/oder Normalbetriebszustand, das Ausgabeelement zur Erzeugung der Statusinformation mit einem gleichbleibenden und/oder unveränderlichen weiteren Ansteuersignal anzusteuern. Hierdurch kann insbesondere eine vorteilhafte Ansteuerung des Ausgabeelements erreicht werden. Zudem kann eine Diagnoseinformation vorteilhaft einfach und/oder energieeffizient erzeugt werden.

Vorzugsweise ist die Ansteuerelektronik dazu vorgesehen, zur Erzeugung der Diagnoseinformation eine Frequenz des Ansteuersignals zu verändern, insbesondere zu variieren, insbesondere derart, dass ein Signal, insbesondere Ausgabesignal, des Ausgabeelements variiert. Hierdurch können vorteilhaft einfach unterschiedliche Diagnoseinformationen erzeugt werden.

Des Weiteren wird vorgeschlagen, dass die Ansteuerelektronik dazu vorgesehen ist, zur Erzeugung der Diagnoseinformation ein Tastverhältnis des Ansteuersignals zu verändern, insbesondere zu variieren, insbesondere derart, dass ein Signal, insbesondere Ausgabesignal, des Ausgabeelements variiert. Hierdurch können vorteilhaft weitere unterschiedliche Diagnoseinformationen erzeugt werden. Zudem kann vorteilhaft bei einer Kombination mit einer Veränderung einer Frequenz des Ansteuersignals eine Anzahl unterschiedlicher Diagnoseinformationen erhöht werden.

Alternativ oder zusätzlich wird vorgeschlagen, dass die Ansteuerelektronik dazu vorgesehen ist, zur Erzeugung der Diagnoseinformation eine Intensität des Ansteuersignals zu verändern, insbesondere zu variieren, insbesondere derart, dass ein Signal, insbesondere Ausgabesignal, des Ausgabeelements variiert. Hierdurch können vorteilhaft weitere unterschiedliche Diagnoseinformationen erzeugt werden. Zudem kann vorteilhaft bei einer Kombination mit einer Veränderung einer Frequenz des Ansteuersignals und/oder einer Veränderung eines Tastverhältnisses des Ansteuersignals eine Anzahl unterschiedlicher Diagnoseinformationen weiter erhöht werden.

Gemäß einer besonders bevorzugten Ausgestaltung der Erfindung wird vorgeschlagen, dass die Handwerkzeugmaschinenvorrichtung zumindest eine Umschalteinheit aufweist, welche dazu vorgesehen ist, insbesondere in Abhängigkeit von einem Auslöseereignis, einen Wechsel von dem Betriebszustand, insbesondere dem Verwendungsbetriebszustand und/oder Normalbetriebszustand, in den Diagnosebetriebszustand und/oder von dem Diagnosebetriebszustand in den Betriebszustand, insbesondere den Verwendungsbetriebszustand und/oder Normalbetriebszustand, zu bewirken. Insbesondere ist die Umschalteinheit dabei dazu vorgesehen, das Auslöseereignis, wie beispielsweise eine Betätigung eines speziellen Schalters, ein Vorhandensein und/oder ein Fehlen eines speziellen Auslösesignals und/oder ein Vorhandensein und/oder ein Fehlen eines speziellen Auslöseobjekts, zu erfassen, zu erkennen und/oder zu detektieren. Insbesondere kann die Handwerkzeugmaschinenvorrichtung dabei auch eine Auslösevorrichtung umfassen, welche dazu vorgesehen ist, das Auslöseereignis und/oder ein Auslösen der Umschalteinheit zu bewirken. Hierdurch kann vorteilhaft lediglich bei Bedarf, beispielsweise bei Auftreten einer Fehlfunktion, ein Umschalten in einen Diagnosebetriebszustand initiiert und ansonsten ein effizienzoptimierter Betrieb erreicht werden.

Ein weiterer Aspekt der Erfindung bezieht sich auf ein System mit zumindest einer Handwerkzeugmaschinenvorrichtung, wie zuvor beschrieben, und mit zumindest einer, insbesondere in die Handwerkzeugmaschinenvorrichtung integrierten und/oder vorteilhaft von der Handwerkzeugmaschinenvorrichtung getrennt ausgebildeten, Dekodierungsvorrichtung, welche zu einer Dekodierung der Diagnoseinformation, insbesondere des Ausgabeelements, vorgesehen ist. Unter einer "Dekodierungsvorrichtung" soll dabei insbesondere eine, vorteilhaft zumindest teilweise elektrische und/oder elektronische, Vorrichtung verstanden werden, welche insbesondere zumindest eine Dekodierungselektronik umfasst und insbesondere zur Erfassung, Verarbeitung und/oder Interpretation wenigstens einer von dem Ausgabeelement bereitgestellten Diagnoseinformation vorgesehen ist. Bevorzugt umfasst die Dekodierungsvorrichtung dabei zur Erfassung der Diagnoseinformation zumindest ein Erfassungselement, wie beispielsweise ein Mikrofon, eine Kamera und/oder bevorzugt eine Photodiode und/oder ein Phototransistor. Besonders bevorzugt ist die Dekodierungsvorrichtung zu einer Dekodierung sämtlicher Diagnoseinformationen, insbesondere von zumindest zwei, vorteilhaft zumindest vier, vorzugsweise zumindest sechs und besonders bevorzugt zumindest acht, verschiedenen Diagnoseinformationen, des Ausgabeelements vorgesehen. Hierdurch kann insbesondere eine vorteilhaft einfache Dekodierung und/oder Auswertung der Diagnoseinformationen erreicht werden.

Ein weiterer Aspekt der Erfindung bezieht sich auf ein System mit zumindest einer Handwerkzeugmaschinenvorrichtung, wie zuvor beschrieben, und mit zumindest einer von der Handwerkzeugmaschinenvorrichtung getrennt ausgebildeten Auslösevorrichtung, welche dazu vorgesehen ist, ein Auslösen der Umschalteinheit zu bewirken. Hierdurch kann insbesondere ein vorteilhaft einfacher Wechsel zwischen einem Betriebszustand und einem Diagnosebetriebszustand erreicht werden. Zudem kann vorteilhaft lediglich bei Bedarf, beispielsweise bei Auftreten einer Fehlfunktion, ein Umschalten in den Diagnosebetriebszustand initiiert werden.

Vorzugsweise ist die Auslösevorrichtung als speziell programmierte Energiespeichervorrichtung, vorteilhaft ein Akkupack, ausgebildet und insbesondere zur Verwendung mit einer Handwerkzeugmaschine und/oder einem Handwerkzeugmaschinenladegerät und/oder zumindest eines Teils der Handwerkzeugmaschine und/oder zumindest eines Teils des Handwerkzeugmaschinenladegeräts vorgesehen. Hierdurch kann insbesondere ein Wechsel zwischen einem Betriebszustand und einem Diagnosebetriebszustand weiter vereinfacht werden. Zudem kann vorteilhaft auf vorhandene Schnittstellen zurückgegriffen werden, wodurch vorteilhaft Kosten minimiert werden können.

Zudem geht die Erfindung aus von einem Verfahren zum Betrieb einer Handwerkzeugmaschinenvorrichtung, insbesondere einer Induktionshandwerkzeugmaschinenvorrichtung, wobei in zumindest einem, insbesondere aktiven, Betriebszustand, insbesondere einem Verwendungsbetriebszustand und/oder Normalbetriebszustand, mittels zumindest eines Ausgabeelements eine Statusinformation ausgegeben wird.

Es wird vorgeschlagen, dass in zumindest einem, insbesondere aktiven, Diagnosebetriebszustand mittels des Ausgabeelements wenigstens eine von der Statusinformation abweichende Diagnoseinformation ausgegeben wird. Hierdurch kann insbesondere eine Effizienz und/oder eine Flexibilität verbessert werden. Ferner können vorteilhaft einfach Diagnoseinformationen zwischen der Handwerkzeugmaschinenvorrichtung und einem Benutzer und/oder einem Servicepersonal ausgetauscht werden, wobei vorteilhaft auf eine Demontage der Handwerkzeugmaschinenvorrichtung und/oder spezielle Diagnosewerkzeuge verzichtet werden kann. Somit können vorteilhaft Kosten gesenkt und/oder eine Betriebssicherheit verbessert werden. Zudem kann vorteilhaft ein Fertigungsprozess und/oder eine Herstellungsqualität verbessert werden.

Die Handwerkzeugmaschinenvorrichtung und das Verfahren zum Betrieb der Handwerkzeugmaschinenvorrichtung sollen hierbei nicht auf die oben beschriebene Anwendung und Ausführungsform beschränkt sein. Insbesondere können die Handwerkzeugmaschinenvorrichtung und das Verfahren zum Betrieb der Handwerkzeugmaschinenvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Handwerkzeugmaschine und ein Handwerkzeugmaschinenladegerät mit einer Handwerkzeugmaschinenvorrichtung in einer perspektivischen Darstellung,
- Fig. 2: ein Ansteuersignal einer Ansteuerelektronik der Handwerkzeugmaschinenvorrichtung zur Erzeugung einer Diagnoseinformation,
- Fig. 3: ein System mit der Handwerkzeugmaschinenvorrichtung aus Figur 1 und einer Auslösevorrichtung in einer perspektivischen Darstellung,
- Fig. 4: ein System mit der Handwerkzeugmaschinenvorrichtung aus Figur 1 und einer Dekodierungsvorrichtung zur Dekodierung der Diagnoseinformation in einer schematischen Darstellung und
- Fig. 5: ein weiteres Ausführungsbeispiel einer Handwerkzeugmaschine mit einer Handwerkzeugmaschinenvorrichtung und eines Handwerkzeugmaschinenladegeräts in einer perspektivischen Darstellung.

### Beschreibung der Ausführungsbeispiele

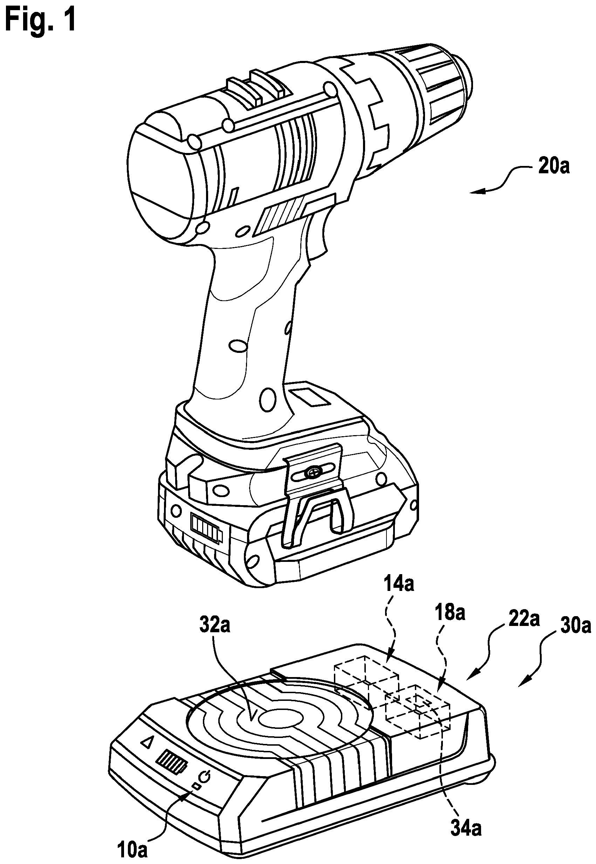

Figur 1 zeigt eine beispielhaft als Akkuschrauber ausgebildete Handwerkzeugmaschine 20a und ein zu der Handwerkzeugmaschine 20a korrespondierendes Handwerkzeugmaschinenladegerät 22a in einer perspektivischen Darstellung. Die Handwerkzeugmaschine 20a und das Handwerkzeugmaschinenladegerät 22a sind separat und/oder getrennt voneinander ausgebildet. Das Handwerkzeugmaschinenladegerät 22a ist zu einem Laden der Handwerkzeugmaschine 20a vorgesehen.

Im vorliegenden Fall ist die Handwerkzeugmaschine 20a ferner als Induktionshandwerkzeugmaschine ausgebildet. Zudem ist das Handwerkzeugmaschinenladegerät 22a als Induktionshandwerkzeugmaschinenladegerät ausgebildet. Das Handwerkzeugmaschinenladegerät 22a ist dabei als Ladeplatte ausgebildet. Das Handwerkzeugmaschinenladegerät 22a ist als eine induktive Akkuladevorrichtung ausgebildet. Das Handwerkzeugmaschinenladegerät 22a ist demnach in zumindest einem Betriebszustand zu einer kontaktlosen, im vorliegenden Fall insbesondere induktiven, Übertragung von elektrischer Energie an die Handwerkzeugmaschine 20a vorgesehen. Prinzipiell könnte eine Handwerkzeugmaschine jedoch auch als eine von einer Induktionshandwerkzeugmaschine abweichende, insbesondere herkömmliche, Handwerkzeugmaschine und/oder ein Handwerkzeugmaschinenladegerät als ein von einem Induktionshandwerkzeugmaschinenladegerät abweichendes, insbesondere herkömmliches, insbesondere kabelgebundenes, Handwerkzeugmaschinenladegerät ausgebildet sein. Ferner könnte eine Handwerkzeugmaschine auch als beliebige von einem Akkuschrauber abweichende Handwerkzeugmaschine ausgebildet sein. Zudem könnte ein Handwerkzeugmaschinenladegerät auch als Ladeschale oder dergleichen ausgebildet sein.

Das Handwerkzeugmaschinenladegerät 22a umfasst eine Handwerkzeugmaschinenvorrichtung. Die Handwerkzeugmaschinenvorrichtung umfasst eine Gehäuseeinheit 30a. Die Gehäuseeinheit 30a ist im vorliegenden Fall als Ladegehäuse ausgebildet. Die Gehäuseeinheit 30a ist als Außengehäuse ausgebildet. Die Gehäuseeinheit 30a ist zumindest im Wesentlichen quaderförmig ausgebildet. Die Gehäuseeinheit 30a weist eine zumindest im Wesentlichen ebene Aufnahmefläche 32a, insbesondere zum Aufstellen und/oder Auflegen der Handwerkzeugmaschine 20a, insbesondere bei einem Ladevorgang, auf. Die Gehäuseeinheit 30a ist dazu vorgesehen, zumindest einen Großteil der für einen Betrieb der Handwerkzeugmaschinenvorrichtung benötigten Bauteile aufzunehmen und/oder zu lagern.

Die Handwerkzeugmaschinenvorrichtung umfasst ferner zumindest ein Ausgabeelement 10a. Das Ausgabeelement 10a ist an der Gehäuseeinheit 30a angeordnet, im vorliegenden Fall insbesondere derart, dass das Ausgabeelement 10a von einem Benutzer und/oder von außen sichtbar ist. Das Ausgabeelement 10a ist ferner als optisches Ausgabeelement ausgebildet. Das Ausgabeelement 10a ist dabei als einzelnes Leuchtelement ausgebildet. Im vorliegenden Fall ist das Ausgabeelement 10a als Bereitschafts-Leuchtelement und/oder Standby-Leuchtelement ausgebildet. Das Ausgabeelement 10a ist ferner als, insbesondere einfarbige, im vorliegenden Fall insbesondere grüne, LED ausgebildet. Das Ausgabeelement 10a ist dazu vorgesehen, ein Ausgabesignal bereitzustellen.

Das Ausgabeelement 10a ist in einem aktiven Betriebszustand, insbesondere einem Verwendungsbetriebszustand und/oder Normalbetriebszustand, zu einer Ausgabe einer Statusinformation, im vorliegenden Fall insbesondere einer Bereitschaftsinformation, vorgesehen. Die Statusinformation entspricht dabei einem definierten Ausgabesignal des Ausgabeelements 10a. Die Statusinformation entspricht im vorliegenden Fall einem dauerhaft aktiven Ausgabezustand, insbesondere einem dauerhaften Leuchten, des Ausgabeelements 10a.

Darüber hinaus ist das Ausgabeelement 10a in einem aktiven Diagnosebetriebszustand zur Ausgabe wenigstens einer von der Statusinformation abweichenden Diagnoseinformation vorgesehen. Im vorliegenden Fall ist das Ausgabeelement 10a in dem Diagnosebetriebszustand zur Ausgabe von zumindest acht verschiedenen Diagnoseinformationen vorgesehen. Die Diagnoseinformationen entsprechen verschiedenen definierten Ausgabesignalen des Ausgabeelements 10a. Die verschiedenen Diagnoseinformationen entsprechen im vorliegenden Fall einem veränderlichen Ausgabezustand des Ausgabeelements 10a, insbesondere einem unterschiedlich langen, unterschiedlich schnellen und/oder unterschiedlich hellen Blinken und/oder Leuchten des Ausgabeelements 10a. Alternativ könnte ein Ausgabeelement auch als OLED und/oder als Glühlampe oder dergleichen ausgebildet sein. Ferner könnte ein Ausgabeelement im vorliegenden Fall auch als Fehler-Leuchtelement und/oder als Ladestatus-Leuchtelement ausgebildet sein. Zudem ist denkbar, ein Ausgabeelement als beliebiges von einem optischen Ausgabeelement abweichendes Ausgabeelement auszubilden, wie beispielsweise als haptisches Ausgabeelement und/oder als akustisches Ausgabeelement. Darüber hinaus könnte ein Ausgabeelement prinzipiell auch dazu vorgesehen sein, genau eine Diagnoseinformation und/oder eine Vielzahl von Diagnoseinformationen, wie beispielsweise zumindest zwanzig verschiedene Diagnoseinformationen, auszugeben.

Zu einer Ansteuerung des Ausgabeelements 10a umfasst die Handwerkzeugmaschinenvorrichtung ferner eine Ansteuerelektronik 14a. Die Ansteuerelektronik 14a ist in der Gehäuseeinheit 30a angeordnet. Die Ansteuerelektronik 14a ist als elektronische Einheit ausgebildet. Die Ansteuerelektronik 14a weist eine Wirkverbindung mit dem Ausgabeelement 10a auf. Im vorliegenden Fall weist die Ansteuerelektronik 14a eine elektrische Verbindung mit dem Ausgabeelement 10a auf.

Die Ansteuerelektronik 14a ist dazu vorgesehen, in dem Betriebszustand, insbesondere dem Verwendungsbetriebszustand und/oder Normalbetriebszustand, das Ausgabeelement 10a zur Erzeugung der Statusinformation mit einem gleichbleibenden Ansteuersignal 16a anzusteuern.

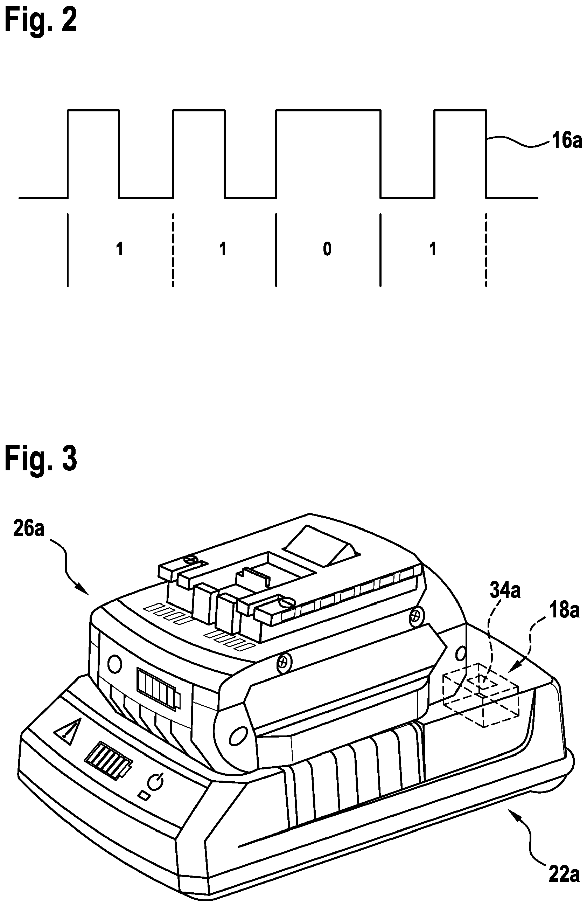

Zudem ist die Ansteuerelektronik 14a dazu vorgesehen, in dem Diagnosebetriebszustand das Ausgabeelement 10a zur Erzeugung der Diagnoseinformationen mit einem veränderlichen Ansteuersignal 16a anzusteuern (vgl. auch Figur 2).

Im vorliegenden Fall ist die Ansteuerelektronik 14a dazu vorgesehen, zur Erzeugung der Diagnoseinformationen eine Frequenz des Ansteuersignals 16a zu variieren, insbesondere derart, dass das Ausgabesignal des Ausgabeelements 10a variiert und das Ausgabeelement 10a insbesondere unterschiedlich schnell blinkt.

Zudem ist die Ansteuerelektronik 14a dazu vorgesehen, zur Erzeugung der Diagnoseinformationen ein Tastverhältnis des Ansteuersignals 16a zu variieren, insbesondere derart, dass das Ausgabesignal des Ausgabeelements 10a variiert und das Ausgabeelement 10a insbesondere unterschiedlich lang blinkt.

Darüber hinaus kann die Ansteuerelektronik 14a dazu vorgesehen sein, zur Erzeugung der Diagnoseinformationen eine Intensität des Ansteuersignals 16a zu variieren, insbesondere derart, dass das Ausgabesignal des Ausgabeelements 10a variiert und das Ausgabeelement 10a insbesondere unterschiedlich hell leuchtet.

Im vorliegenden Fall ist die Ansteuerelektronik 14a ferner dazu vorgesehen, die, insbesondere genannten, unterschiedlichen Ansteuermethoden, insbesondere mit einer variierenden Frequenz, mit einem variierenden Tastverhältnis und einer variierenden Intensität des Ansteuersignals 16a, zu kombinieren, wodurch vorteilhaft eine hohe Anzahl unterschiedlicher Diagnoseinformationen bereitgestellt und eine Flexibilität vorteilhaft erhöht werden kann. Alternativ ist jedoch auch denkbar, dass eine Ansteuerelektronik dazu vorgesehen sein kann, lediglich eine Frequenz eines Ansteuersignals, ein Tastverhältnis eines Ansteuersignals oder eine Intensität eines Ansteuersignals zu verändern und/oder zu variieren.

Darüber hinaus umfasst die Handwerkzeugmaschinenvorrichtung eine Umschalteinheit 18a. Die Umschalteinheit 18a ist in der Gehäuseeinheit 30a angeordnet. Die Umschalteinheit 18a ist als elektronische Einheit ausgebildet. Die Umschalteinheit 18a weist eine Wirkverbindung mit der Ansteuerelektronik 14a auf. Im vorliegenden Fall weist die Umschalteinheit 18a eine elektrische Verbindung mit der Ansteuerelektronik 14a auf.

Die Umschalteinheit 18a ist dazu vorgesehen, wenigstens ein Auslöseereignis, im vorliegenden Fall insbesondere ein Vorhandensein und/oder Fehlen einer Auslösevorrichtung 26a, zu detektieren (vgl. insbesondere auch Figur 3). Zudem ist die Umschalteinheit 18a dazu vorgesehen, in Abhängigkeit von dem Auslöseereignis einen Wechsel von dem Betriebszustand, insbesondere dem Verwendungsbetriebszustand und/oder Normalbetriebszustand, in den Diagnosebetriebszustand und von dem Diagnosebetriebszustand in den Betriebszustand, insbesondere dem Verwendungsbetriebszustand und/oder Normalbetriebszustand, zu bewirken.

Dazu umfasst die Umschalteinheit 18a zumindest ein Detektionselement 34a. Das Detektionselement 34a ist im vorliegenden Fall als Detektionsspule ausgebildet. Alternativ könnte ein Detektionselement jedoch auch als beliebiges von einer Detektionsspule abweichendes Detektionselement ausgebildet sein, wie beispielsweise als induktiver, kapazitiver, magnetischer und/oder optischer Näherungsschalter, als Ultraschall-Näherungsschalter und/oder als Funkempfänger oder dergleichen. Zudem könnte eine Umschalteinheit auch einstückig mit einer, vorteilhaft als Schwingkreis ausgebildeten, Energieübertragungseinheit eines Handwerkzeugmaschinenladegeräts und/oder einer, vorteilhaft als Schwingkreis ausgebildeten, Energieempfängereinheit einer Handwerkzeugmaschine ausgebildet sein.

Figur 3 zeigt beispielhaft ein System mit dem Handwerkzeugmaschinenladegerät 22a und der Auslösevorrichtung 26a. Das Handwerkzeugmaschinenladegerät 22a und die Auslösevorrichtung 26a sind separat und/oder getrennt voneinander ausgebildet. Die Auslösevorrichtung 26a ist als speziell programmierte Energiespeichervorrichtung, im vorliegenden Fall insbesondere als ein Akkupack, ausgebildet. Die Auslösevorrichtung 26a ist dazu vorgesehen, ein Auslösen und somit insbesondere einen Wechsel von dem Betriebszustand, insbesondere dem Verwendungsbetriebszustand und/oder Normalbetriebszustand, in den Diagnosebetriebszustand und von dem Diagnosebetriebszustand in den Betriebszustand, insbesondere dem Verwendungsbetriebszustand und/oder Normalbetriebszustand, zu bewirken. Dabei ist das Detektionselement 34a der Umschalteinheit 18a dazu vorgesehen, eine Annäherung und/oder ein Vorhandensein der Auslösevorrichtung 26a in einem Nahbereich des Handwerkzeugmaschinenladegeräts 22a zu detektieren. Alternativ könnte eine Auslösevorrichtung auch als beliebiges von einer Energiespeichervorrichtung abweichendes Auslöseobjekt ausgebildet sein. Zudem ist denkbar, eine Auslösevorrichtung in ein Handwerkzeugmaschinenladegerät und/oder eine Handwerkzeugmaschine zu integrieren, beispielsweise in Form eines, insbesondere von einem Benutzer betätigbaren, Schalters oder dergleichen.

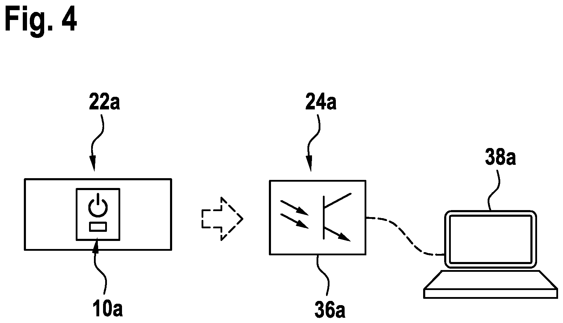

Figur 4 zeigt beispielhaft ein System mit dem Handwerkzeugmaschinenladegerät 22a und einer Dekodierungsvorrichtung 24a. Das Handwerkzeugmaschinenladegerät 22a und die Dekodierungsvorrichtung 24a sind separat und/oder getrennt voneinander ausgebildet. Die Dekodierungsvorrichtung 24a ist zu einer Dekodierung der Diagnoseinformationen, insbesondere sämtlicher Diagnoseinformationen, insbesondere der verschiedenen Ausgabesignale des Ausgabeelements 10a, vorgesehen.

Dazu umfasst die Dekodierungsvorrichtung 24a zumindest ein Erfassungselement 36a. Das Erfassungselement 36a ist im vorliegenden Fall als Photodiode ausgebildet. Das Erfassungselement 36a ist zu einer Erfassung der Diagnoseinformationen vorgesehen.

Zudem umfasst die Dekodierungsvorrichtung 24a eine Dekodierungselektronik 38a. Die Dekodierungselektronik 38a entspricht im vorliegenden Fall beispielhaft einem, insbesondere fest-installierten, externen Gerät, insbesondere einen Desktop-PC. Die Dekodierungselektronik 38a ist dabei zur Erfassung, Verarbeitung und Interpretation der von dem Ausgabeelement 10a bereitgestellten Diagnoseinformation vorgesehen. Grundsätzlich ist auch denkbar, eine Dekodierungsvorrichtung in ein Handwerkzeugmaschinenladegerät und/oder in eine Handwerkzeugmaschine zu integrieren. Ferner könnte ein Erfassungselement von einer Photodiode abweichen und beispielsweise als Kamera, insbesondere CCD-Kamera, oder dergleichen ausgebildet sein. Ferner könnte eine Dekodierungselektronik auch in ein mobiles externes Gerät integriert sein, wie beispielsweise ein Notebook, ein Tablet und/oder ein Smartphone.

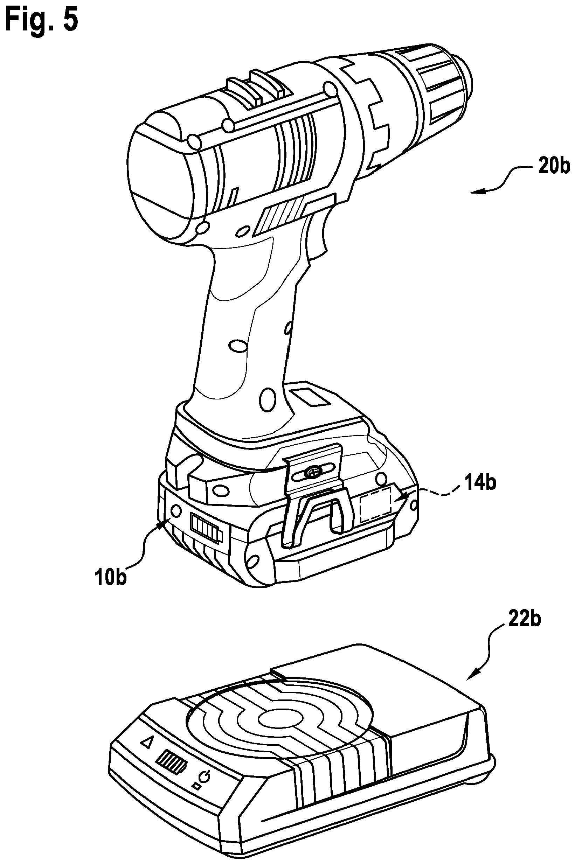

In Figur 5 ist ein weiteres Ausführungsbeispiel der Erfindung gezeigt. Die nachfolgende Beschreibung und die Zeichnung beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des anderen Ausführungsbeispiels, insbesondere der Figuren 1 bis 4, verwiesen werden kann. Zur Unterscheidung der Ausführungsbeispiele ist der Buchstabe a den Bezugszeichen des Ausführungsbeispiels in den Figuren 1 bis 4 nachgestellt. In dem Ausführungsbeispiel der Figur 5 ist der Buchstabe a durch den Buchstaben b ersetzt.

Figur 5 zeigt ein weiteres Ausführungsbeispiel der Erfindung mit einer, insbesondere beispielhaft als Akkuschrauber ausgebildeten, Handwerkzeugmaschine 20b und mit einem zu der Handwerkzeugmaschine 20b korrespondierenden Handwerkzeugmaschinenladegerät 22b. Die Handwerkzeugmaschine 20b und das Handwerkzeugmaschinenladegerät 22b entsprechen dabei im Wesentlichen der Handwerkzeugmaschine 20a und dem Handwerkzeugmaschinenladegerät 22a des vorherigen Ausführungsbeispiels.

In diesem Fall umfasst jedoch die Handwerkzeugmaschine 20b eine erfindungsgemäße Handwerkzeugmaschinenvorrichtung. Die Handwerkzeugmaschinenvorrichtung ist dabei in ein Akkupack der Handwerkzeugmaschine 20b integriert. Darüber hinaus entspricht die Handwerkzeugmaschinenvorrichtung des gezeigten Ausführungsbeispiels der Handwerkzeugmaschinenvorrichtung des vorherigen Ausführungsbeispiels.

Demnach umfasst die Handwerkzeugmaschine 20b eine Handwerkzeugmaschinenvorrichtung mit einem Ausgabeelement 10b, welches in zumindest einem Betriebszustand zu einer Ausgabe einer Statusinformation und in zumindest einem Diagnosebetriebszustand zur Ausgabe wenigstens einer von der Statusinformation abweichenden Diagnoseinformation vorgesehen ist sowie vorteilhaft einer Ansteuerelektronik 14b, welche dazu vorgesehen ist, zumindest in dem Diagnosebetriebszustand das Ausgabeelement 10b zur Erzeugung der Diagnoseinformation mit einem veränderlichen Ansteuersignal anzusteuern.

## Patentansprüche

1. Handwerkzeugmaschinenvorrichtung, insbesondere Induktionshandwerkzeugmaschinenvorrichtung, mit zumindest einem Ausgabeelement (10a; 10b), welches in zumindest einem Betriebszustand zu einer Ausgabe einer Statusinformation vorgesehen ist, **dadurch gekennzeichnet, dass** das Ausgabeelement (10a; 10b) in zumindest einem Diagnosebetriebszustand zur Ausgabe wenigstens einer von der Statusinformation abweichenden Diagnoseinformation vorgesehen ist.

2. Handwerkzeugmaschinenvorrichtung nach Anspruch 1, **dadurch gekennzeichnet, dass** das Ausgabeelement (10a; 10b) zur Ausgabe von zumindest zwei verschiedenen Diagnoseinformationen vorgesehen ist.

3. Handwerkzeugmaschinenvorrichtung nach Anspruch 1 oder 2, **dadurch gekennzeichnet, dass** das Ausgabeelement (10a; 10b) als optisches Ausgabeelement ausgebildet ist.

4. Handwerkzeugmaschinenvorrichtung nach einem der vorhergehenden Ansprüche, **dadurch gekennzeichnet, dass** das Ausgabeelement (10a; 10b) als Bereitschafts-Leuchtelement ausgebildet ist.

5. Handwerkzeugmaschinenvorrichtung nach einem der vorhergehenden Ansprüche, **gekennzeichnet durch** zumindest eine Ansteuerelektronik (14a; 14b), welche dazu vorgesehen ist, zumindest in dem Diagnosebetriebszustand das Ausgabeelement (10a; 10b) zur Erzeugung der Diagnoseinformation mit einem veränderlichen Ansteuersignal (16a) anzusteuern.

6. Handwerkzeugmaschinenvorrichtung nach Anspruch 5, **dadurch gekennzeichnet, dass** die Ansteuerelektronik (14a; 14b) dazu vorgesehen ist, zur Erzeugung der Diagnoseinformation eine Frequenz des Ansteuersignals (16a) zu verändern.

7. Handwerkzeugmaschinenvorrichtung nach Anspruch 5 oder 6, **dadurch gekennzeichnet, dass** die Ansteuerelektronik (14a; 14b) dazu vorgesehen ist, zur Erzeugung der Diagnoseinformation ein Tastverhältnis des Ansteuersignals (16a) zu verändern.

8. Handwerkzeugmaschinenvorrichtung nach einem der Ansprüche 5 bis 7, **dadurch gekennzeichnet, dass** die Ansteuerelektronik (14a; 14b) dazu vorgesehen ist, zur Erzeugung der Diagnoseinformation eine Intensität des Ansteuersignals (16a) zu verändern.

9. Handwerkzeugmaschinenvorrichtung nach einem der vorhergehenden Ansprüche, **gekennzeichnet durch** zumindest eine Umschalteinheit (18a), welche dazu vorgesehen ist, einen Wechsel von dem Betriebszustand in den Diagnosebetriebszustand und/oder von dem Diagnosebetriebszustand in den Betriebszustand zu bewirken.

10. Handwerkzeugmaschine (20b) mit zumindest einer Handwerkzeugmaschinenvorrichtung nach einem der vorhergehenden Ansprüche.

11. Handwerkzeugmaschinenladegerät (22a), insbesondere Induktionshandwerkzeugmaschinenladegerät, mit zumindest einer Handwerkzeugmaschinenvorrichtung nach einem der Ansprüche 1 bis 9.

12. System mit zumindest einer Handwerkzeugmaschinenvorrichtung nach einem der Ansprüche 1 bis 9, und mit zumindest einer Dekodierungsvorrichtung (24a), welche zu einer Dekodierung der Diagnoseinformation vorgesehen ist.

13. System mit zumindest einer Handwerkzeugmaschinenvorrichtung zumindest nach Anspruch 9 und mit zumindest einer von der Handwerkzeugmaschinenvorrichtung getrennt ausgebildeten Auslösevorrichtung (26a), welche dazu vorgesehen ist, ein Auslösen der Umschalteinheit (18a) zu bewirken.

14. System nach Anspruch 13, **dadurch gekennzeichnet, dass** die Auslösevorrichtung (26a) als speziell programmierte Energiespeichervorrichtung ausgebildet ist.

15. Verfahren zum Betrieb einer Handwerkzeugmaschinenvorrichtung, insbesondere nach einem der Ansprüche 1 bis 9, wobei in zumindest einem Betriebszustand mittels zumindest eines Ausgabeelements (10a; 10b) eine Statusinformation ausgegeben wird, **dadurch gekennzeichnet, dass** in zumindest einem Diagnosebetriebszustand mittels des Ausgabeelements (10a; 10b) wenigstens eine von der Statusinformation abweichende Diagnoseinformation ausgegeben wird.
